Europäisches Patentamt

European Patent Office

Office européen des brevets

(11) Numéro de publication : **0 114 130**
**B1**

(12) # FASCICULE DE BREVET EUROPÉEN

(45) Date de publication du fascicule du brevet :
16.04.86

(51) Int. Cl.⁴ : **B 60 R   1/06**

(21) Numéro de dépôt : **84400043.0**

(22) Date de dépôt : **10.01.84**

(54) Rétroviseur orientable commandé à distance.

(30) Priorité : **11.01.83 FR 8300589**

(43) Date de publication de la demande :
**25.07.84 Bulletin 84/30**

(45) Mention de la délivrance du brevet :
**16.04.86 Bulletin 86/16**

(84) Etats contractants désignés :
**DE GB IT**

(56) Documents cités :
**FR-A- 2 356 198**
**PATENTS ABSTRACTS OF JAPAN, vol. 6, no. 242 (M-175) 1120, 30th November 1982**

(73) Titulaire : **AUTOMOBILES CITROEN**
**62 Boulevard Victor-Hugo**
**F-92200 Neuilly-sur-Seine (FR)**

**AUTOMOBILES PEUGEOT**
**75, avenue de la Grande Armée**
**F-75116 Paris (FR)**

(72) Inventeur : **Nozati, Louis**
**9, allée de Montréal**
**F-91430 Igny (FR)**

(74) Mandataire : **Boivin, Claude**
**9, rue Edouard-Charton**
**F-78000 Versailles (FR)**

Jouve, 18, rue St-Denis, 75001 Paris, France

## Description

La présente invention concerne les rétroviseurs orientables commandés à distance, particulièrement pour véhicule automobile.

Ces rétroviseurs comportent un miroir supporté par un boîtier. Ils peuvent être de deux types. Dans les uns, le miroir est fixé dans le boîtier qui est orientable, alors que dans les autres le miroir est orientable dans le boîtier qui est fixe.

Les rétroviseurs à boîtier orientable présentent, à surface frontale égale, une aire réfléchissante plus importante donc un champ de vision plus grand, que ceux à boîtier fixe. Mais les forces aérodynamiques exercées sur le boîtier doivent être encaissées par le mécanisme de commande à distance et s'opposent aux actions de réglage. Les organes de transmission sont relativement volumineux et coûteux et leur manœuvre est moins aisée que celle d'un rétroviseur à boîtier fixe.

Les rétroviseurs à boîtier fixe présentent l'avantage de pouvoir être facilement commandés à l'aide de dispositifs légers n'ayant pas à supporter l'action des forces dynamiques. Mais, dans les rétroviseurs de ce genre actuellement réalisés, il est nécessaire d'assurer la protection périphérique du miroir dans ses positions extrêmes et de prévoir un jeu latéral de dégagement, ce qui, à surface frontale égale, réduit le champ du rétroviseur.

Le brevet français FR-A-2 356 198 décrit un rétroviseur commandé à distance qui correspond aux caractéristiques du préambule de la revendication 1, comprenant un boîtier fixe et un miroir qui est relié au boîtier par un soufflet, celui-ci assurant l'étanchéité du rétroviseur et permettant l'orientation du miroir par rapport au boîtier. Ce dernier présente sur sa face frontale un repli auquel est fixé le bord avant du soufflet, celui-ci étant disposé derrière cette face frontale. Le miroir est ainsi logé à l'intérieur du boîtier, recouvert à sa périphérie par le repli de ce boîtier et en retrait par rapport à la face frontale de celui-ci. Il faut par suite qu'il y ait un jeu latéral entre le boîtier et le miroir pour permettre le débattement de ce miroir et la section du rétroviseur est nettement supérieure à la surface utile du miroir.

La présente invention a pour objet un rétroviseur à boîtier fixe qui ne présente pas les inconvénients mentionnés ci-dessus et qui cumule ainsi les avantages des rétroviseurs à boîtier fixe et ceux des rétroviseurs à boîtier mobile.

Le rétroviseur selon l'invention est caractérisé en ce que le soufflet est disposé devant la face frontale du boîtier auquel il est fixé par son bord arrière et en ce que le miroir est fixé au bord avant du soufflet en étant ainsi dégagé du boîtier et situé dans un plan frontal affleurant sensiblement le volume d'ensemble du rétroviseur.

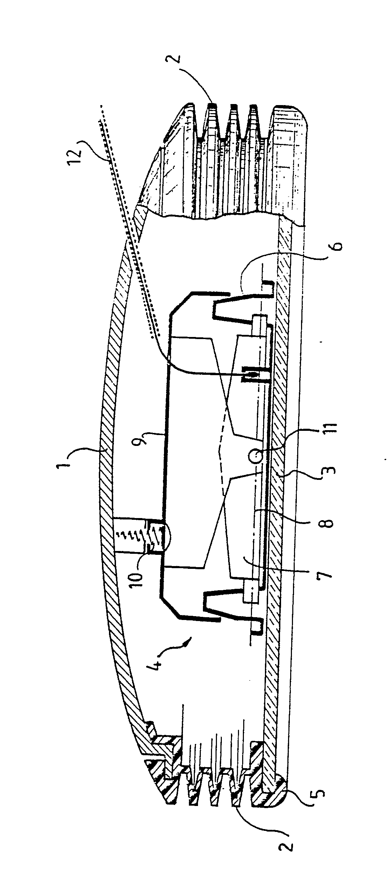

On a décrit ci-après, à titre d'exemple non limitatif, un mode de réalisation du rétroviseur selon l'invention, avec référence à la figure unique du dessin annexé qui représente ce rétroviseur partiellement en coupe axiale et partiellement en élévation.

Tel qu'il est représenté au dessin, le rétroviseur selon l'invention comprend un boîtier plat 1 dont la face frontale est fixée au bord arrière d'un soufflet 2. Un miroir 3 supportant le mécanisme de commande 4 est disposé devant le boîtier et sa périphérie est emboîtée dans un bourrelet 5 prévu sur le bord avant du soufflet. Ce dernier a ainsi la triple fonction d'assurer la fixation du miroir, sa protection et la finition du rétroviseur. Le miroir 3 est dégagé du boîtier 1 et situé dans un plan frontal affleurant sensiblement le volume d'ensemble du rétroviseur, ce qui améliore la perception, et augmente le champ du rétroviseur. Le boîtier ne gêne absolument pas l'orientation du miroir. Pour un miroir de surface donnée, il n'y a pas de jeu périphérique, de sorte que la surface frontale du rétroviseur est réduite. L'épaisseur du rétroviseur est également réduite puisque le boîtier ne comporte pas de rebord de protection du miroir.

Le mécanisme de commande 4 peut être quelconque. Dans l'exemple de réalisation représenté, il comprend une cuvette 6 qui est fixée sur la face interne du miroir 3. Un élément intermédiaire 7 est monté pivotant autour d'un axe 8 dans la cuvette 6 et un couvercle de mécanisme 9 fixé par une vis 10 au boîtier 1, est monté pivotant par rapport à l'élément 7 autour d'un axe 11 perpendiculaire à l'axe 8. Des câbles à gaine 12 permettent de faire pivoter l'élément 7 par rapport au couvercle 9, donc par rapport au boîtier fixe 1, et de faire pivoter le miroir 3 par rapport à l'élément 7.

## Revendication

Rétroviseur commandé à distance comprenant un boîtier fixe (1) et un miroir (3) qui est relié au boîtier par un soufflet (2) assurant l'étanchéité et permettant l'orientation du miroir par rapport au boîtier, caractérisé en ce que le soufflet (2) est disposé devant la face frontale du boîtier (1) auquel il est fixé par son bord arrière et en ce que le miroir (3) est fixé au bord avant du soufflet (2) en étant ainsi dégagé du boîtier et situé dans un plan frontal affleurant sensiblement le volume d'ensemble du rétroviseur.

## Claim

Remotely controlled rear view mirror comprising a fixed case (1) and a mirror (3) which is connected to the case by a bellows (2) providing sealing and allowing the mirror to be oriented with respect to the case, characterized in that the bellows (2) is disposed in front of the front face of the case (1) to which it is fixed by its rear edge and in that the mirror (3) is fixed to the front edge of the bellows (2) while thus being disengaged in the case and situated in a front plane substantially flush with the overall volume of the rear view mirror.

**Patentanspruch**

Fernbetätigbarer Rückspiegel mit einem feststehenden Gehäuse (1) und einem Spiegel (3), der über einen Balgen (2) zur Abdichtung und zur Ausrichtung des Spiegels gegenüber dem Gehäuse mit diesem verbunden ist, dadurch gekennzeichnet, daß der Balgen (2) an der Vorderseite des Gehäuses (1) frontal angeordnet und mit seinem rückwärtigen Rand an diesem befestigt ist und daß der Spiegel (3) am vorderen Rand des Balgens derart befestigt ist, daß er vom Gehäuse entkuppelt in einer Ebene zu liegen kommt, in der er das Volumen des Rückspiegelaufbaus zumindest im wesentlichen satt anliegend frontal abschließt.